# EUROPEAN PATENT APPLICATION

(11) **EP 1 650 906 A1**
(43) Date of publication of application: **26.04.2006**
(21) Application number: 04736753.7
(22) Date of filing: 14.06.2004
(51) Int. Cl.: H04L 12/56

(54) **METHOD FOR THE DYNAMIC MANAGEMENT OF RESOURCES IN TELECOMMUNICATION SYSTEMS, BASED ON QUALITY OF SERVICE AND TYPE OF SERVICE**

(30) Priority: 15.07.2003 ES 200301663
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INS A, Juan Carlos, E-46019 Valencia (ES); PUIGCERVER CALBO, Miguel, E-03510 Callosa D'en Sarria (ES); RUIZ L PEZ, David, E-46007 Valencia (ES); G MEZ MART NEZ, Feliciano, E-46001 Valencia (ES); CARRERAS ARENY, Judit, E-46008 Valencia (ES)
(74) Representative: Ungria Lopez, Javier
(86) International application number: PCT/ES2004/000271
(87) International publication number: WO 2005/008972

(57) **Abstract**

It is **characterized by** the management of traffic and resources in the source node (1) by means of ordered sets of cells, with dynamically adjustable qualities of service and different configurations of insertion and extraction of cells for the distribution of resources. It permits different qualities of service for each destination node (2, 3, 4, 5) of the information sent by any source node (1) to be guaranteed and the requisites of maximum permitted latencies of different communication applications to be complied with, being able to combine different types of service.

## Description

### OBJECT OF THE INVENTION

As stated in the title of this specification, the present invention refers to a method for the dynamic management of resources in telecommunication systems based on quality of service and type of services, and is orientated to a multiuser system of digital transmission of data multipoint to multipoint. In the procedure of the invention, the methods chosen for carrying out storage of packets waiting to be transmitted later on are specified.

The invention permits dynamic management of resources among all the nodes (or user equipment) and to prioritise, both in the transmission of packets and in the storage of those packets waiting to be transmitted, permitting different configurations of that storage, in such a way that, in the event of a memory queue that is full, it can be decided to queue a new packet taking into account the priority, the seniority or both parameters of the already stored packets.

### BACKGROUND TO THE INVENTION

The use of systems of linked cells forming queues for the storage of the communication information is known in the state of the art. In each cell it is possible to store one packet of information. Storage is also necessary for being able to support, for example, the acknowledgement protocols in reception, which requires the generation of a signal by the receiver user in order to release a packet stored in the transmitter user. Hereinafter, when it is stated that an application requires a CBR type of service, this refers to the fact that the application generates traffic with constant bandwidth. Also, when it is stated that an application requires a VBR type of service, this refers to the fact that the application generates traffic with variable bandwidth, and finally, when it is stated that an application requires a UBR type of service, this refers to the fact that the application generates traffic with undefined bandwidth. Moreover, in this specification, the term cell is used as a self-contained logic unit to which can be associated a destination, a packet, a seniority, in other words the time it has been in a queue waiting to be transmitted, and a priority bearing in mind moreover the type of service to which the packet belongs.

Known in the state of the art is the use of storage systems for multipoint to multipoint communication systems like that appearing in patent USA 6549541, where a storage procedure is described taking into account a total number of storage positions F, a total number of packets which can use storage positions T*, and a minimum capacity granted to each user, with a packet not being stored when the user has more packets stored than the granted minimum and F<T*. This procedure does not permit the use of shared maximum storage among different users, which is provided for and solved in the present invention.

Moreover, the procedure of the invention is advantageous since it permits greater control over access to queues having maximums, shared maximums and those which can be accessed by priority and seniority in an optimized way. These characteristics make it possible to use the priority information in each cell permitting queuing to be carried out by using this information, with which support can be provided for different applications with different bandwidth needs. Also, the procedure of the invention permits each remote user to have a quantity of cells reserved for it, a quantity of cells for sharing with a group of users, and a quantity of cells which it shares with all users. Finally, said configuration of maximums of cells is dynamically adjusted in order to be adapted to the needs of the communication.

### DESCRIPTION OF THE INVENTION

In order to achieve the objectives and avoid the drawbacks stated in the above section, the invention consists of a method for the dynamic management of resources in telecommunication systems based on quality of service and type of services, in which there exists a plurality of user nodes communicated by means of links with different latency and bandwidth requirements, with a cell being a self-contained unit with a priority, a destination, a seniority and an associated packet; and a queue being an ordered set of cells.

The procedure is characterized in that the source node manages the traffic and the resources towards the destination nodes, it distributes the resources dynamically among the destination nodes, and it reserves a memory capacity in its queues depending on the class of service and the quality of service that are demanded; and because one or more different configurations are used for insertion and extraction of cells of the ordered queues.

It is also characterized in that the source node manages the quality of service of each destination node and selectively reserves a number of cells for itself, it shares a number of cells with a group of destination nodes, it shares a number of cells with all the destination nodes, or it carries out several of these actions at the same time.

Moreover, the source node manages the type of service associated with each packet, and configures the quality of service of each destination node which is selectively different for each destination node and different from the configuration in the opposite direction of transmission in a two-way communication between the destination and the source node, and it adjusts that quality of service dynamically.

The source node configures the number of destination nodes and the number of cells and selectively modifies that configuration during the management process, or it keeps it fixed during the process, and said source node selectively uses the information relating to the priority, the number of cells used by each destination node or both in order to decide on the following destination node.

These characteristics manage to guarantee a different quality of service for each destination node and to comply with the requirements of maximum latencies of different applications, and they permit different types of service to be combined.

The invention provides for different queue management configurations based on different aspects selected from among:
- a queue management configuration based on the seniority of the cells in the queues, in other words, on the time spent by a cell in a queue; in such a way that the cell that has spent most time in a queue is extracted from that queue so that the packet contained in that cell can be transmitted, and a cell is inserted in the queue, always provided that the queue is not full.
- a queue management configuration based on priority, in other words, based on the value of a certain field carried by the packets that are introduced into the cells; in such a way that, defining P1 as the highest priority and P2 as the lowest priority among all the cells of the queue, one of the P1 priority cells (being able to be any of the queued cells having the same priority equal to priority P1) is always extracted from the queue and a new cell (which we will in general call cell X) with priority PX is inserted into a full queue only when PX is greater than or equal to the priority P2, with a cell of priority P2 having to be extracted in order to be able to insert the cell X.
- a queue management configuration based both on the priority and on the seniority of the cells of the queue; in such a way that, defining P1 as the highest priority and P2 as the lowest priority among all the cells of the queue, the most senior cell of priority P1 is extracted from a queue and a new cell (which we will in general call cell X) with priority PX is inserted into a full queue only when PX is greater than priority P2, with the cell with least seniority, in other words the one which has spent least time in the queue, of priority P2 having to be extracted in order to be able to insert the cell X.
- queue management configurations based both on priority and on novelty, for example, defining P1 as the highest priority and P2 as the lowest priority among all the cells of the queue, the most senior cell of priority P1 is extracted from a queue and a new cell (which we will in general call cell X) with priority PX is inserted into a full queue only when PX is greater than or equal to priority P2, with the most senior cell, in other words the one which has spent most time in the queue, of priority P2 having to be extracted in order to be able to insert the cell X.

For the management of queues, the procedure of the invention defines four global maximums: a maximum of cells of the system (MAX), a maximum of cells of a first type (MAX_A), a maximum of cells of a second type (MAX_B), a maximum of cells of a third type (MAX_C) and a maximum of cells of the set of the second and third type (MAX_B_C). These values follow a series of relations such as MAX is equal to the sum of MAX_A and MAX_B_C, that a cell of the first type is available when the number of free cells of the first type is less than MAX_A, that a cell of the second type is available when the number of free cells of the second type is less than MAX_B, and the number of free cells of the second type plus the number of free cells of the third type is less than MAX_B_C, that a cell of the third type is available when the number of free cells of the third type is less than MAX_C and the number of free cells of the second type plus the number of free cells of the third type is less than MAX_B_C, and that any of the maximums MAX_A, MAX_B or MAX_C can be zero provided that MAX_A and MAX_B_C are not zero at the same time.

Similarly, the procedure describes two maximums for each destination node (MAX_A_NODE, MAX_B_NODE), these maximums being different for each node and being able to have values greater than or equal to zero and the possibility is selectively indicated of the use of cells of the third type (USE_C) and the non-use of said cells of the third type (NOT_USE_C). The procedure is also characterized by certain values and certain relations among these values, such as MAX_A_NODE is the maximum number of cells of the first type which a certain destination node can have; MAX_B_NODE is the maximum number of cells of the second type which this node can have, always provided there remain cells of the second type available; that the sum of the MAX_A_NODE of all the destination nodes has to be less than or equal to MAX_A, that the sum of the MAX_B_NODE of all the destination nodes can be greater than MAX_B; and that a node with the possibility of using cells of the third type (USE_C) can use cells of the third type always provided there are cells of this type available.

In order to be able to offer different types of traffic to the nodes, the procedure is also characterized in that, by using the configuration of maximums per node and global maximums, CBR traffic is guaranteed using the MAX_A_NODE, VBR traffic using the MAX_B_NODE, and UBR traffic using the USE_C or NOT_USE_C,

Finally, the procedure provides for the dynamic adjustment of the defined values, in such a way that the global and local maximums vary dynamically in order to be adjusted to the variations in the configuration of the destination nodes, to the bandwidth required by the applications, to the conditions of the channel used in the communication, and to the quality of service required by the applications or types of traffic which the applications require, such as CBR, VBR or UBR.

The main advantage of the invention is the greater control over access to the packet queues. Each user can use cells from different queues and have certain usable maximums of cells, individual and shared among sets of users. Also, the configuration of the maximums of cells can be dynamically modified in order to be adjusted to changes in the channel or to the needs of the communication applications.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

Figure 1.- Represents a system where a user node 1 wishes to transmit to other user nodes 2, 3, 4 and 5.
**Figure 2.-** Represents the instants of storage and transmission of new queues towards the different user nodes.

### DESCRIPTION OF AN EMBODIMENT OF THE INVENTION

Given below is a description of an example of the invention, making reference to the numbering adopted in the figures.

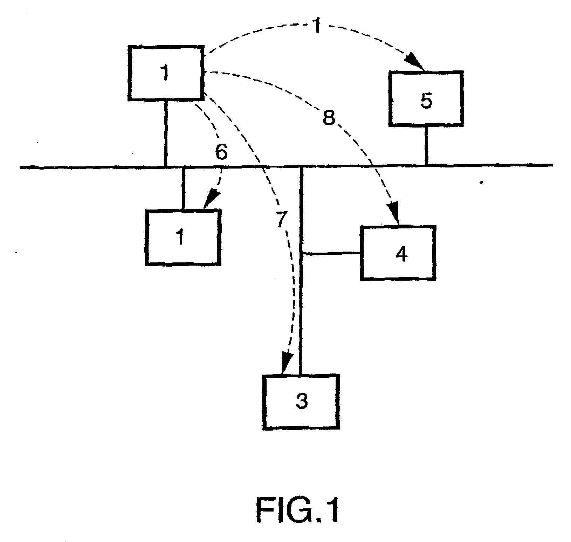

In this example of embodiment, a digital transmission system of data, multipoint to multipoint, two-way, is presented in which one user node communicates with various user nodes by means of a series of links. In this system, the packets are stored in cells prior to being transmitted. This example of embodiment can be seen In figure 1 in which some nodes (1), (2), (3), (4) and (5) are any of the user nodes of the system, and a node (1) communicates with the rest of the nodes by means of a series of links (6), (7), (8) and (9).

The procedure of the invention provides for certain global maximums, which were described in the section on description of the invention, and which are indicated below along with the values established for this example of embodiment: a maximum of cells of the first type (MAX_A) equal to 15, a maximum of cells of the second type (MAX_B) equal to 5, a joint maximum of cells of the second type plus the third type (MAX_B_C) equal to 32, and a maximum of cells of the third type (MAX_C) equal to 30. In the example of embodiment, the first type of cell is referred to as type A, the second type B and the third type C.

The transmitter node (1) has a link configured with node (2) with CBR traffic (6), in other words, with traffic with a constant bandwidth and it is necessary to reserve a fixed number of cells which are always available for storing packets waiting to be sent from node (1) to node (2). In the example of embodiment the procedure defines two maximums for each destination node (MAX_A_NODE). So, node (2) has a MAX_A_NODE_2 equal to ten. This maximum has been set taking into account the bandwidth of the application with CBR traffic and taking into account the current conditions of the channel, and in this example of embodiment it is concluded that CBR traffic will be able to be supported with ten cells. A queue of cells is used for storing the traffic waiting to be transmitted from node (1) to node (2) and is administrated using a storage configuration based on seniority and priority, which was described in the section on description of the invention.

The transmitter node (1) has the link configured with the node (3) with VBR traffic (7), in other words, with traffic with variable bandwidth in such a way that a maximum number of cells MAX_B_NODE_3 equal to five can be reserved for it, being able to share three of those five cells with node (4), in accordance with the maximums in this example of embodiment. The queue of packets waiting to be transmitted from node (1) to node (3) is administrated with a seniority configuration.

The transmitter node (1) has the link configured with the node (4) with VBR traffic (6), assigning a MAX_B_NODE_4 equal to three. But, access to the link from node (1) to node (4) is also granted to those of the third type (C) in order to be able to support UBR traffic, in other words, traffic with an undefined bandwidth, being limited in this example of embodiment to values between 0 and 30 cells. The queue of packets waiting to be transmitted from node (1) to node (4) is administrated with a configuration by seniority.

Finally, the link (9) from node (1) to node (5) only has access to the cells of the third type (C), with the storage configuration used in this communication being by novelty and priority.

The following table provides a summary of the arrangement of links and cells according to the example of embodiment. This configuration can be dynamically modified in time in order to follow the communication needs and changes in the communications channel.

| | Type of traffic | Maximum type A cells | Maximum type B cells | Possibility of use of type C cells | Possibility of storage in queues |
|---|---|---|---|---|---|
| Link (6) | CBR | 10 | 0 | No | Seniority and priority |
| Link (7) | VBR | 0 | 5 | No | Seniority |
| Link (8) | VBR + UBR | 0 | 3 | Yes | Seniority |
| Link (9) | UBR | 0 | 0 | Yes | Novelty and priority |

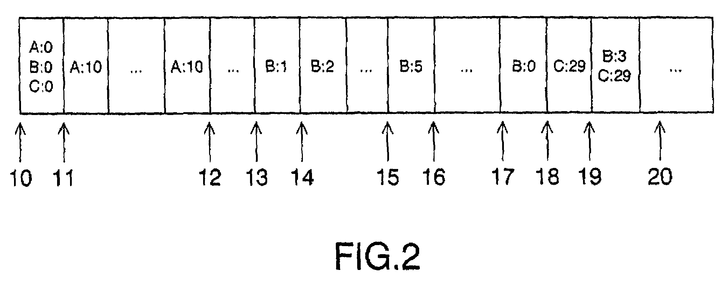

As shown in the time line of figure 2, representing the instants of time and use of the cells of the queues for the transmitter node (1), initially, all the queues are empty (10).

At a certain instant (11), node (1) has to transmit a packet for node (2), with which a cell of the first type (A) is used for storing it, so that there remain 9 cells of the first type (A) available for transmissions to node (2), though there are a total of 14 cells of the first type (A) free altogether. If, at a certain instant (12), node (1) has now used 10 cells of the first type (A) and a new packet arrives for being stored destined for node (2), the information on the priority of the new packet will be examined using, for example, the field which indicates the type of traffic, in order to decide whether an already stored packet is to be eliminated in order to incorporate the new one or whether the new packet is to be eliminated. In this case, a search will be made among all the cells of the queue of packets towards node (2) to see whether any of the cells contains a packet of lower priority than the new packet. If there exist packets with lower priority, the packet of the cell which has spent least time in the queue and which has the lowest priority along all the cells will be eliminated.

At the instant (13), node (1) has to transmit a packet to node (3), with which a cell of the second type (B) will be used for storing it, with 4 cells of type B remaining available to node (3). Later, at a certain instant (14), a cell has to be stored for node (4), with which a cell of type B will be used, with just 3 cells of the second type (B) remaining available to node (3) and 2 cells of the second type (B) available to node (4), though node (4) can use all the cells of the third type (C) that are free. In this way, nodes (3) and (4) are sharing a number of cells taking into account that they have a variable bandwidth and they do not always need to have a fixed number of cells available to them. It has to be borne in mind that, if the type of application for the user node (4) or user node (3) changes requires a fixed bandwidth, cells of the first type (A) can be assigned to it in order to absorb that traffic.

After that, packets for user nodes (4) and (3) continue to be stored, in such a way that at the instant (15) all the cells of type B are being used, for example, user node (4) has used 3 cells of the second type and user node (3) has used 2 cells of the second type, and then it is necessary to store a packet for user node (4) with storage configuration by seniority at the instant (16), with which that packet is eliminated due to there being no free cells of the second type (B) available.

Moreover, when the packets are transmitted to the user nodes (4) and (3) there will again be 5 cells of the second type (B) free, which occurs at the instant (17). At an instant (18), in the example of embodiment, 29 packets have to be sent for the user node (5) for which 29 cells of the third type (C) will be used. After that, three packets have to be transmitted for the user node (3) using three cells of the second type (B) (19). If, later on, at a certain instant (20), another packet has to be sent for the user node (5), taking into account that the total set of cells used of the second and third type is 32, there is no cell where this packet can be stored. Bearing in mind that the storage configuration of the user node (5) is by novelty and priority, all the cells with lowest priority in the queue of packets to node (5) will be searched and the information contained in the cell which has spent most time in the queue will be discarded in order to be able to store the new packet.

## Claims

1. **METHOD FOR THE DYNAMIC MANAGEMENT OF RESOURCES IN TELECOMMUNICATION SYSTEMS, BASED ON QUALITY OF SERVICE AND TYPE OF SERVICE**, there existing a plurality of user nodes communicated by means of links with different latency and bandwidth requirements, with a cell being a self-contained unit with a priority, a destination, a seniority and an associated packet; and a queue being an ordered set of cells, **characterized in that** the source node:
- manages the traffic and the resources towards the destination nodes;
- distributes the resources dynamically among the destination nodes, and it reserves a memory capacity in its queues depending on the class of service and the quality of service that are demanded;
- uses at least one configuration for insertion and extraction of cells of the ordered queues;
- manages the quality of service of each destination node and selectively reserves a number of cells for itself, it shares a number of cells with a group of destination nodes, it shares a number of cells with all the destination nodes, and it selectively carries out a combination of these actions simultaneously.
- manages the type of service associated with each packet;
- configures the quality of service of each destination node which is selectively different for each destination node and different from that configured in the opposite direction in a two-way communication between the destination node and the source node;
- adjusts the quality of service dynamically;
- configures the number of destination nodes and selectively modifies it during the management process;
- maintains the number of cells in a configurable way in order to permit their modification during the management process; and
- uses information selected from among the priority, the quantity of cells used by each destination node and a combination of both in order to decide on the following destination node to which it is going to transmit;
in order to guarantee different qualities of service for each destination node, comply with the requisites of maximum latencies permitted of various applications and permit different types of service to be combined.

2. **METHOD FOR THE DYNAMIC MANAGEMENT OF RESOURCES IN TELECOMMMICATION SYSTEMS, BASED ON QUALITY OF SERVICE AND TYPE OF SERVICE** according to claim 1, **characterized in that** it comprises the use of a queue management configuration based on the seniority of the cells in the queues, in other words, on the time spent by a cell in a queue, in order to extract from a queue the cell that has spent most time in it and insert a cell in a queue, always provided that the queue is not full.

3. **METHOD FOR THE DYNAMIC MANAGEMENT OF RESOURCES IN TELECOMMUNICATION SYSTEMS, BASED ON QUALITY OF SERVICE AND TYPE OF SERVICE** according to claim 1, **characterized in that** it comprises the use of a queue management configuration based on priority, in other words, based on the value of a certain field carried by the packets that are introduced into the cells; so that, defining P1 as the highest priority and P2 as the lowest priority among all the cells of the queue, one of the P1 priority cells is always extracted from the queue and a new cell X with priority PX is inserted into a full queue only when PX is selected between a value greater than the priority P2 and a value equal to the priority P2, with a cell of priority P2 having to be extracted in order to be able to insert the new cell X.

4. **METHOD FOR THE DYNAMIC MANAGEMENT OF RESOURCES IN TELECOMMUNICATION SYSTEMS, BASED ON QUALITY OF SERVICE AND TYPE OF SERVICE** according to claims 2 and 3, **characterized in that** it comprises the use of a queue management configuration based both on priority and on the seniority of the cells of the queue; so that, defining P1 as the highest priority and P2 as the lowest priority among all the cells of the queue, the most senior cell of priority P1 is extracted from a queue and a new cell X with priority PX is inserted into a full queue only when PX is greater than the priority P2, with the least senior cell, in other words, the one which has spent least time in the queue, of priority P2 having to be extracted in order to be able to insert the new cell X.

5. **METHOD FOR THE DYNAMIC MANAGEMENT OF RESOURCES IN TELECOMMUNICATION SYSTEMS, BASED ON QUALITY OF SERVICE AND TYPE OF SERVICE** according to claims 2 and 3, **characterized in that** it comprises the use of a queue management configuration based both on priority and on novelty; so that, defining P1 as the highest priority and P2 as the lowest priority among all the cells of the queue, the most senior cell of priority P1 is extracted from a queue and a new cell X with priority PX is inserted into a full queue only when PX is selected between a value greater than the priority P2 and a value equal to the priority P2, with the most senior cell, in other words, the one which has spent most time in the queue, of priority P2 having to be extracted in order to be able to insert the new cell X

6. **METHOD FOR THE DYNAMIC MANAGEMENT OF RESOURCES IN TELECOMMUNICATION SYSTEMS, BASED ON QUALITY OF SERVICE AND TYPE OF SERVICE** according to claim 1, **characterized in that** four global maximums are defined: a maximum of cells of the system (MAX), a maximum of cells of a first type (MAX_A), a maximum of cells of a second type (MAX_B), a maximum of cells of a third type (MAX_C) and a maximum of cells of the set of the second and third type (MAX_B_C), where
- the maximum of cells of the system (MAX) is equal to the sum of the maximum of cells of the first type (MAX_A) and the maximum of cells of the set of the second type and third type (MAX_B_C);
- a cell of the first type is available when the number of free cells of the first type is less than the maximum of cells of the first type (MAX_A);
- a cell of the second type is available when the number of free cells of the second type is less than the maximum of cells of the second type (MAX_B) and the number of free cells of the second type plus the number of free cells of the third type is less than the maximum of cells of the second and third type (MAX_B_C);
- a cell of the third type is available when the number of free cells of the third type is less than the maximum of cells of the third type (MAX_C) and the number of free cells of the second type plus the number of free cells of the third type is less than the maximum of cells of the second and third type (MAX_B_C); and
- the maximums of the first (MAX_A), second (MAX_B) and second and third (MAX_B_C) type of cell are independent values selected from among a value greater than zero and a value equal to zero provided that the maximum of the first type (MAX_A) and of the set of the second and third type (MAX_B_C) are not zero at the same time.

7. **METHOD FOR THE DYNAMIC MANAGEMENT OF RESOURCES IN TELECOMMUNICATION SYSTEMS, BASED ON QUALITY OF SERVICE AND TYPE OF SERVICE** according to claim 6, **characterized in that** two maximums are defined for each destination node (MAX_A_NODE, MAX_B_NODE), selected from between a value equal to zero and a value greater than zero and different for each node and an action is indicated selected between the use of cells of the third type (USE_C) and the non-use of said cells of the third type (NOT_USE_C), where:
- a maximum (MAX_A_NODE) is the maximum of cells of the first type which a certain destination node can have;
- the other maximum (MAX_B_NODE) is the maximum of cells of the second type which that destination node can have, always provided there remain cells of the second type available;
- the sum of the maximum of cells of the first type (MM_A_NODE) of all the destination nodes has to be a value selected between a value less than the maximum of cells of the first type (MAX_A) and a value equal to the maximum of cells of the first type (MAX_A);
- the sum of the maximums of cells of the second type (MAX_B_NODE) of all the destination nodes is not limited by the maximum of cells of the second type (MAX_B); and
- a node with the possibility of using cells of the third type (USE_C) selectively uses cells of the third type always provided there are cells of this type available and when there are no cells of this type available it does not use them.

8. **METHOD FOR THE DYNAMIC MANAGEMENT OF RESOURCES IN TELECOMMUNICATION SYSTEMS, BASED ON QUALITY OF SERVICE AND TYPE OF SERVICE** according to claims 6 and 7, **characterized in that** the configuration of maximums per node and global maximums is used for guaranteeing CBR traffic (with constant bandwidth) using the maximum of cells of the first type which a certain destination node can have (MAX_A_NODE), VBR traffic (with variable bandwidth) using the maximum of cells of the second type which this node can have, always provided there remain cells of the second type available (MAX_B_NODE), and UBR traffic (with undefined bandwidth) using the possibility selected between using cells of the third type (USE_C) and not using said cells of the third type (NOT_USE_C).

9. **METHOD FOR THE DYNAMIC MANAGEMENT OF RESOURCES IN TELECOMMUNICATION SYSTEMS, BASED ON QUALITY OF SERVICE AND TYPE OF SERVICE** according to claim 8, **characterized in that** the global and local maximums are varied dynamically in order to be selectively adjusted to the variations in the configuration of the destination nodes, to the bandwidth required by the applications, to the conditions of the channel used in the communication, to the quality of service required by the applications and to the types of traffic which the applications require, such as CBR, VBR and UBR.
